# EUROPEAN PATENT APPLICATION

(11) **EP 1 199 633 A2**
(43) Date of publication of application: **24.04.2002**
(21) Application number: 01307862.1
(22) Date of filing: 14.09.2001
(51) Int. Cl.: G06F 9/46

(54) **Technique for displaying wait order**

(30) Priority: 19.10.2000 JP 2000319945; 17.07.2001 JP 2001216898
(71) Applicant: Sony Computer Entertainment Inc., Tokyo 107-0052 (JP)
(72) Inventor: Ohtsu, Tamishi, c/o Sony Computer Entertainment In, Tokyo 107-0052 (JP)
(74) Representative: Horner, David Richard

(57) **Abstract**

In the disclosed invention, all accesses of individual users via client terminal devices are once accepted by a server machine without limiting the number of such users, and an order of distribution in relation to the total number of other users in the queue waiting for target information is clearly announced to the user. Since all accesses from the users can be accepted and the current distribution status can be clearly announced to the accessing user, the users are successfully prevented from feeling uneasy about failure in connecting with the server machine.

## Description

### BACKGROUND OF THE INVENTION

### 1. Field of the Invention

The present invention relates to a method for displaying wait order, a computer program for displaying wait order, a storage medium for storing a computer program for displaying wait order, and a content distribution system.

### 2. Description of the Related Art

Nowadays many families have a personal computer device connectable to a communication circuit network such as the internet, or have a game machine having communication function, and thus there is a growing market of network distribution services for distributing various digital contents including game (network game), video game, movie, news and music.

In particular, for the case of playing a network game, a player will connect its own client terminal device, which are a personal computer device or a game machine having communication function, through a communication circuit network to a server machine which distributes a game program for such game. When the connection is established, the server machine distributes a predetermined game program in a packaged or fragmental manner to the client terminal device of such player.

The client terminal device of the player downloads the game program distributed by the server machine, and executes a game program corresponding to terminal operations by the player. The player can thus enjoy the network game through operating a game character or the like on a virtual space.

On the other hand, for the case of purchasing, for example, a video game through a network distribution service, a player will access a network sales site through a communication circuit network such as internet, select a desired video game, select a payment method such as using a credit card or transfer banking, and address a will of purchasing while clarifying its address, name and so forth.

Upon receiving such purchase request from the player, the sales site will distribute game contents of the requested video game to the player immediately or after confirming collection of the charge.

The player will download the game contents distributed from such sales site typically into a hard disk of its own client terminal device. This allows the player to obtain a game program for its desired video game without visiting a sales counter.

It should now be noted that there is a limitation on the number of the players possibly being distributed with the contents at a time, since transmission band of the communication circuit network for distributing the contents is limitative. Hence in the conventional network distribution business, it has been a common practice to preliminarily register a limited number of players within a distributable range and distribute the contents only to the registered players, or reject an excessive portion of the players (prohibit the connection) if the number of access exceeds such predetermined distributable range, to thereby limit the access by the players within a range affordable by the transmission band of the communication circuit network.

Such preliminary player registration limited in a distributable number and the distribution of contents only to the registered players allows, in consequence, only the players preliminarily completed the registration to enjoy the distribution. This inevitably raises a problem in that limiting the players who can enjoy the distribution, and that making the content distribution business closed (limitative). Such access limitation seems to be not preferable since there should be still many players, other than those preliminarily being registered, wanting the distribution of the contents.

Now for the case of limiting the access by rejecting the access (prohibiting the connection) for an excessive portion of the players exceeding a predetermined number of players affordable by the transmission band of the communication circuit network, the rejected players cannot determine by themselves reasons for failing in the connection whether it was because they were out of the distributable range (traffic jam on the network), or it was due to other troubles such as failure in their own client terminal devices or server machine of those concerning the distribution business. This makes the rejected players uneasy.

### SUMMARY OF THE INVENTION

The present invention alleviates the foregoing problems by providing a method for displaying wait order, a computer program for displaying wait order, a storage medium for storing a computer program for displaying wait order, and a content distribution system, all of which in preferred embodiments are capable of accepting all accesses from the players and relieving the players from anxiety about their failure in the connection.

Embodiments of the present invention accept all accesses made by the users through their client terminal devices, send information from a server machine to a client terminal device whenever accessed by a user via such client terminal device, where the information expresses at least a total number of other users accessed earlier than the user and an order in the queue of such user in relation to such total number of other users at the point of time when the access occurred; and display on the client terminal device the received total number of other users and the order in the queue of such user in relation to such total number in a graphical or text style, to thereby clearly show to the user a current status of the target information.

Embodiments of the present invention are preferably applicable to a network game system for enjoying a game by connecting a user's own personal computer device to a game server and operating a game character or so in a virtual space; a content distribution system for distributing various digital contents such as video game, movie, news, music or so through a communication circuit network typified by internet; and a network marketing system enabling reservation or sales of concert tickets or other various commodities through such communication circuit network.

Further particular and preferred aspects of the present invention are set out in the accompanying independent and dependent claims. Features of the dependent claims may be combined with features of the independent claims as appropriate, and in combinations other than those explicitly set out in the claims.

### BRIEF DESCRIPTION OF THE DRAWINGS

The present invention will be described further, by way of example only, with reference to preferred embodiments thereof as illustrated in the accompanying drawings, in which:
Fig. 1 is a block diagram of a network game system according to one embodiment of the present invention;
Fig. 2 is a flow chart for explaining a wait processing executed on the network game system of the foregoing embodiment;
Fig. 3 is a schematic view of an exemplary graphical display on a client terminal device involved in the network game system of the foregoing embodiment;
Fig. 4 is a schematic view of an exemplary text display on a client terminal device involved in the network game system of the foregoing embodiment;
Fig. 5A is a flow chart for explaining a roll-call processing executed in a server machine involved in the network game system of the foregoing embodiment;
Fig. 5B is a flow chart for explaining a roll-call processing executed in a client terminal device involved in the network game system of the foregoing embodiment;
Fig.6A is a flow chart explaining a wait termination processing executed in a server machine involved in the network game system of the foregoing embodiment; and
Fig.6B is a flow chart explaining a wait termination processing executed in a client terminal device involved in the network game system of the foregoing embodiment.

### DETAILED DESCRIPTION OF THE PREFERRED EMBODIMENTS

Various embodiments of the present invention will be described with reference to the accompanying drawings. It is to be noted that the same or similar reference numerals are applied to the same or similar parts and elements throughout the drawings, and the description of the same or similar parts and elements will be omitted or simplified.

One embodiment of the present invention is applicable to a network game system which enables so-called network game through distribution of game contents via a communication circuit network to the individual client terminal devices.

### Constitution of network game system

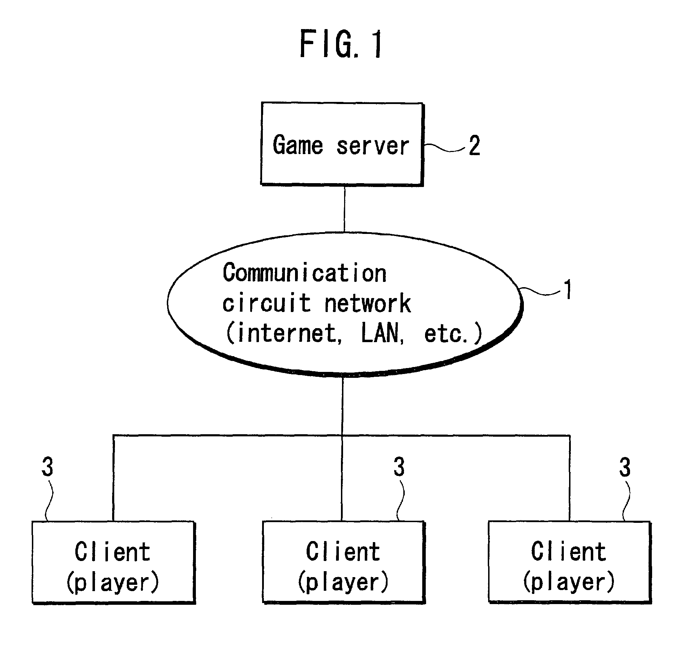

Fig. 1 is a drawing showing an overall constitution of a network game system according to one embodiment of the present invention. As is clear from Fig. 1, the network game system of this embodiment comprises a game server machine **2,** connected to a communication circuit network **1** such as internet, LAN or WAN, for distributing in a packaged or fragmental manner game contents necessary for activating a network game, and a number of client terminal devices **3,** also connected to such communication circuit network **1,** for downloading the game contents distributed therethrough from the game server machine **2** and playing such network game.

The client terminal device **3** can be exemplified as personal computer device or a game machine having communication function for communicating with the game server machine **2** through the communication circuit network **1,** and also as wireless terminal devices such as mobile phone and PHS.

Although the example herein typically shows a case in which wire communication is established between the game server machine **2** and the client terminal devices **3,** an alternative constitution based on wireless communication between the game server machine **2** and the client terminal devices **3** is also allowable. In particular, the communication between the game server machine **2** and the client terminal device **3** will be of wireless for the case a mobile phone (or PHS) is used as a client terminal device **3** (in more exact words, partially wireless communication is established since a base station and the game server machine 2 are still under wire connection).

### Operation of network game system

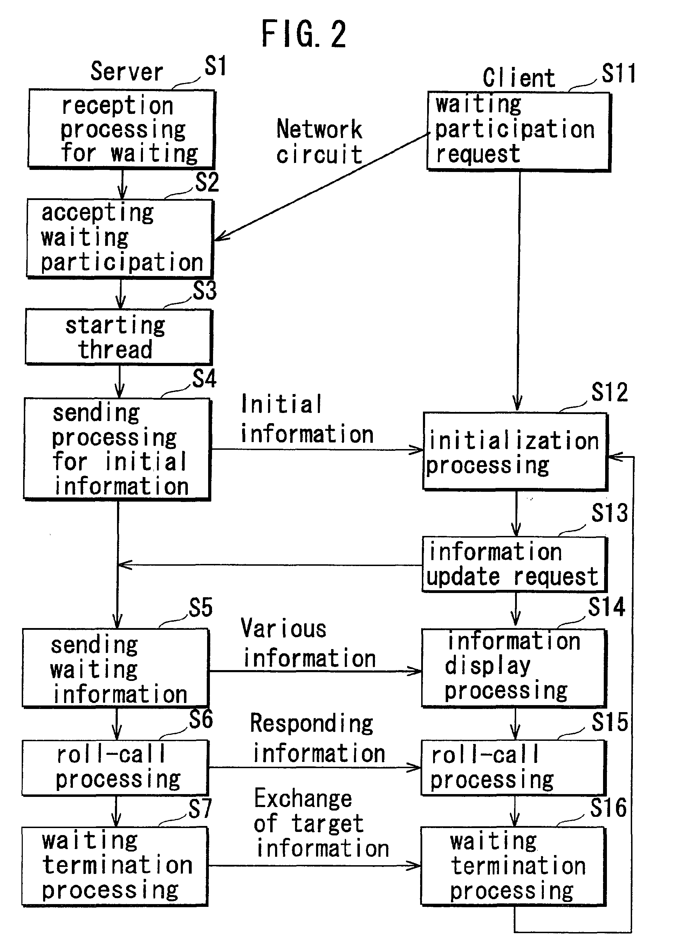

Fig. 2 is a flow chart showing overall operations of the network game system of this embodiment. In the flow chart of Fig. 2, steps **S1** to **S7** are operations on the side of the game server machine **2,** and steps **S11** to **S16** on the side of the client terminal device **3.** It should now be noted that send/receive of the individual information between the game server machine **2** and the client terminal device **3** is effected on the communication circuit network **1** (network circuit).

In the network game system of this embodiment, the game server machine **2** starts a wait reception processing in step **S1** on a scheduled time for starting the network game, that is, on time for starting the distribution of the game contents, which is followed by the process in step **S2**.

The player who wants to be provided with the game contents of such network game accesses the game server machine **2** in step **S11** just on time or thereafter the distribution of the game contents starts by operating the client terminal device **3.** When such access operation is started by the player, the client terminal device **3** activates a pre-installed web browser, and sends an identification number thereof, encoded participation request and so forth to establish an access. Such access from the client terminal device **3** is received by the game server machine **2** as a "waiting participation request".

When the "waiting participation request" is issued, the game server machine **2** receives (accepts) such "waiting participation request" in step **S2**, which is followed by the process in step **S3.**

After accepting the "waiting participation request" from the player, the game server machine **2** then starts in step **S3** a thread for wait processing described below, which is followed by the process in step **S4**.

In step **S4**, the game server machine **2** returns initial information to the client terminal device **3** and then goes to step **S5**, where the initial information returned to the client terminal device **3** includes:
1. current time information (information expressing a current time counted on the game server machine **2);**
2. wait termination time information (time when the game contents is distributed to the player. See "operations for roll-call processing " described later.);
3. roll-call time information (time when the roll-call processing is executed for confirming a will of staying in the queue of the waiting players described later such that being expressed as 1:30 pm, 2:00 pm, for example. See "Operations for roll-call processing" described later.);
4. a maximum distributable number of the game contents (returned for the case the distribution of the game contents is limitative); and
5. a current total number of players in the queue.

When the initial information is returned from the game server machine **2,** the client terminal device **3** downloads in step **S12** such initial information and initializes the system for executing such wait processing based on such initial information, which is followed by the process in step **S13.**

As an exemplary processing of such system initialization, the client terminal device **3** compares a current time received from the game server machine **2** with a current time counted on the client terminal device **3,** and stores a difference between the both. This allows the client terminal device **3** to execute the individual processes including the roll-call processing corresponding to such difference (that is, according to a time counted on the game server machine **2).**

Next in step **S13,** the client terminal device **3** issues an information update request to the game server machine **2,** which is followed by the process in step **S14.** Upon receiving the information update request, the game server machine **2** sends in step **S5** wait information for expressing the current wait status (together with relevant various information) to the client terminal device **3.**

After the wait information (and relevant various information) is sent, the client terminal device **3** then operates in step **S14** based on, for example, Java script and displays on a monitor device an image corresponding to such wait information together with relevant various information (information display processing), which is followed by the process in step **S15.**

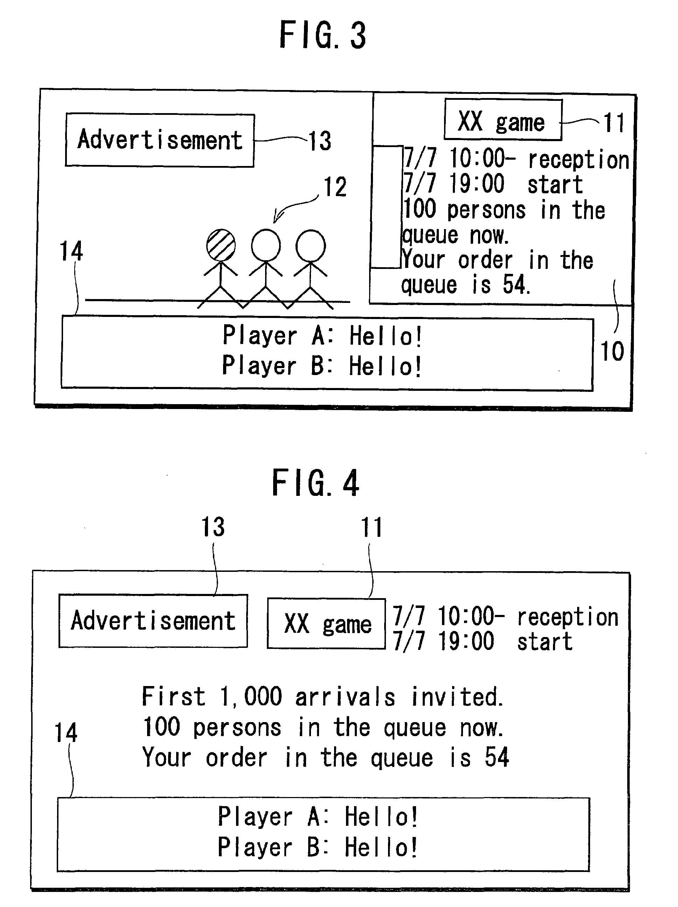

An exemplary graphical display appeared on the monitor device according to such information display processing in step **S14** is shown in Fig. 3. As is clear from Fig. 3, in such exemplary case, a shop image **10** assuming a shop for distributing the game contents is displayed based on the wait information (together with the relevant various information). In such shop image **10**, a game title **11** is shown as "XX game" while simulating a sign board of the shop so as to allow the player to recognize what game content is distributed (waiting for what).

In such case shown in Fig. 3, the shop image **10** also contains a time when the registration for the distribution of the game contents starts (which appears as "7/7 10:00- reception", meaning that the reception starts at 10:00 a.m. on July 7), and a time when the actual distribution of the game contents starts (which appears as "7/7 19:00 start", meaning that the distribution of the game contents starts at 19:00 p.m. on July 7).

The shop image **10** also contains a total number of players waiting for the distribution of the game contents at that point of time ("100 persons in the queue now" is shown in this case), and an order indicating the number of the accessing player in the queue (indicated herein as "your order in the queue").

In front of such shop image **10,** character images **12** simulating the players (animals or so in place of the players also allowable) forming the queue at the storefront are displayed. One character image **12** can be displayed so as to represent one player, or a group of the players (comprising 5, 10 or 100 players, for example).

Among these character images 12, the one corresponding to the accessing player is displayed in a style differ in the color, shape or so, as typically shown with a hatched character in Fig. 3. It is also allowable to add to the character image with a name label having a name of the user of the client terminal device **3** registered in an operating system program of such client terminal device **3,** or to point the character image **12** corresponding to the accessing player with an arrow or the like. This allows the accessing player to intuitively recognize its own position in the queue (its own order in the queue) even if a large number of character images **12** are displayed.

In such case shown in Fig. 3, an advertisement **13** for announcing a coming-soon game machine or a game, for example, is displayed in a residual area in the display. The advertisement **13** may be such that merely composed of images or characters (an advertisement being simply displayed), or may be such that accessible to a home page of the sponsor when clicked thereon such as so-called banner advertisement.

In such case shown in Fig. 3, a chat space **14** is also displayed in which the players can exchange text data on the network in a real time manner to thereby enjoy so-called "chat (= talk)". The chat is enabled by using, for example, IRC (internet relay chat).

Providing such chat space **14** allow each player to enjoy chat with a plurality of other players during a time period for waiting the distribution of the game contents, which is beneficial in that establishing inter-players communication and that being a good kill-time during the waiting.

While such display style described in the above is available for the case that the client terminal device **3** is provided with a web browser supporting graphical display, the contents may also be displayed in a text style when the web browser does not support such graphical display.

Fig. 4 shows an exemplary display in which the contents appeared in a text style. As is clear from Fig. 4, displayed information is essentially the same with that for the foregoing graphical display, which possibly contains the game title **11** of the distributed game, time when the reception for the distribution of the game contents starts, time when the actual distribution of the game contents starts, a current total number of players waiting for the distribution of the game contents, order in the queue of the accessing player, the advertisement **13** and the chat space **14.**

Such display of the current total number of the players and order in the queue of the accessing player on the monitor device of the client terminal device **3** can clarify the justice of the preceding players in the queue. The accessing player can also measure a popularity of the game contents distributed from such game server machine **2** based on the current total number of the players in the queue.

It should now be noted that the displayed contents in Figs. 3 and 4 are exemplary, and it is also allowable to display, besides such contents, prices for the game contents, a scheduled time of distributing the game contents to the accessing player, estimated wait time before the distribution of the game contents, or the like.

For the case that the waiting is properly proceeded based on roll-call processing described below and sending of response information by the client terminal device **3** to the game server machine **2,** the information update request previously described as for step **S13** is issued at regular intervals, and a new current wait order of the accessing player is displayed in a graphical or text style for every update.

Thus the wait order of the accessing player will gradually ascend each time the display image is updated, which allows the player in the queue to feel unstrained.

The client terminal device **3** then goes to step **S15** and executes the roll-call processing. The game server machine **2** returns the wait order information in step **S5** and goes to step **S6** to execute the roll-call processing.

Now there may occur an exemplary case that a player has been waiting for the distribution of the game contents in the queue but has to quit therefrom for some reason, such as short of time or an urgent business, by disconnecting the player's own client terminal device **3** from the game server machine **2.**

In such case, the player quitted from the queue is assumed as not in need of the distribution of the game contents, and the distribution of the game contents to such player is no more possible since the client terminal device **3** thereof is disconnected from the game server machine **2.**

It is thus no more necessary for the game server machine **2** to hold the order of the player quitted from the queue, so that in the network game system of this embodiment, the roll-call processing is executed on the game server machine **2** and the client terminal device **3** at the time set by the initial information, to thereby confirm at predetermined intervals the will of staying in the queue and maintain a proper queue.

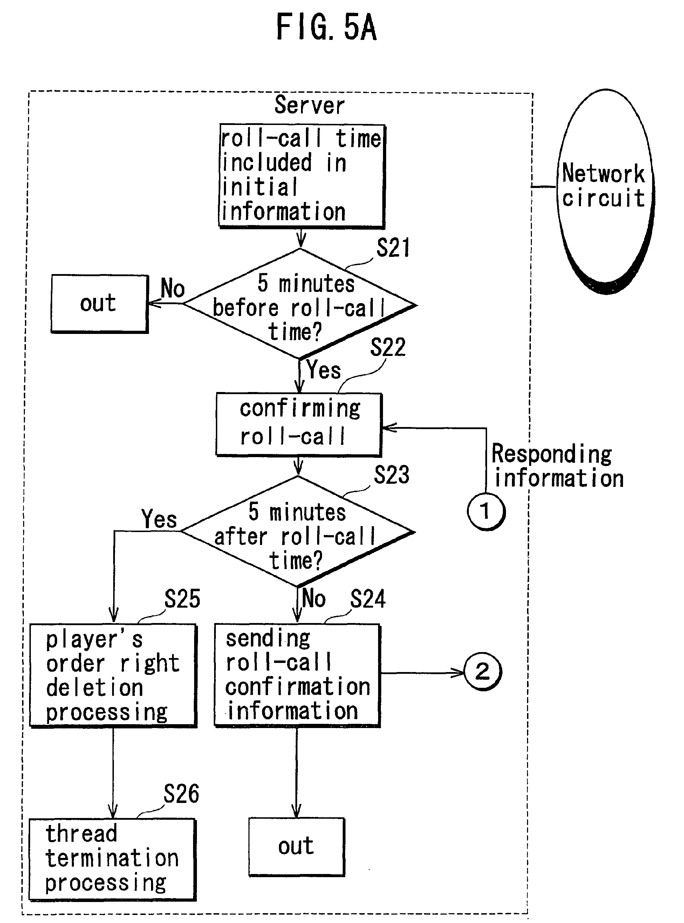

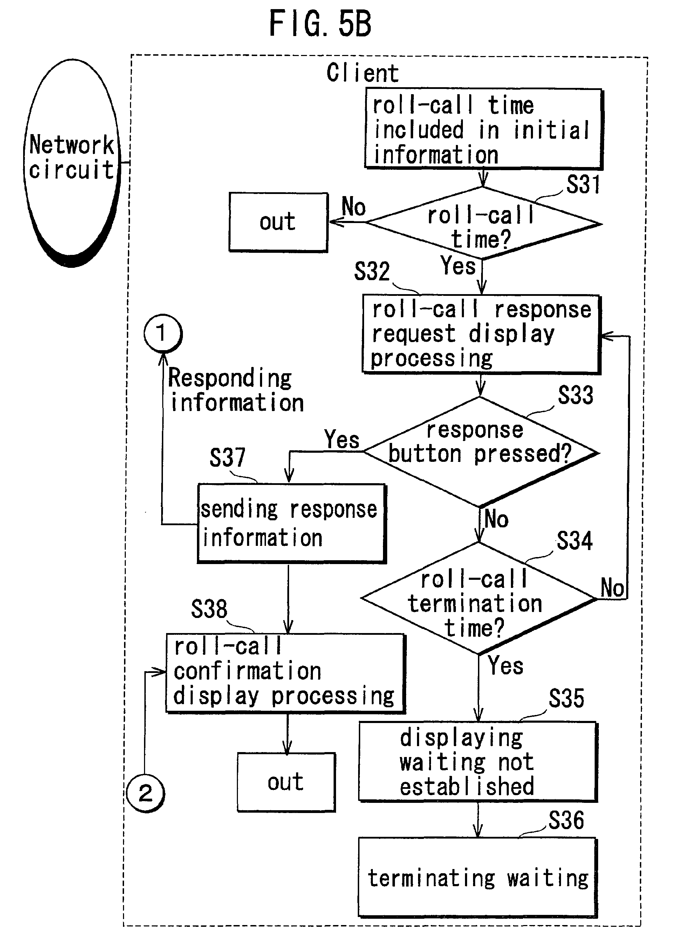

Figs. 5A and 5B are flow charts for specifically explaining the roll-call processing executed on the game server machine **2** in step **S6** and on the client terminal device **3** in step **S15.** Among the individual steps in the flow chart of Fig.5, steps **S21** to **S26** in Fig.5A represent a flow for the roll-call operation on the game server machine **2,** and steps **S31** to **S38** in Fig.5B on the client terminal device **3.**

First, the game server machine **2** sends to the client terminal device **3,** as described in the above, the foregoing current time information expressing a current time counted on the game server machine **2** and the foregoing roll-call time information expressing a time when the roll-call processing is executed, both are part of the initial information.

The client terminal device **3** discriminates in step **S31** in Fig. 5B whether it came time to execute the roll-call processing specified by the game server machine 2 based on the roll-call time information received from the game server machine **2** and a time counted with a timer provided to the client terminal device **3.** The process quits the flow shown in Fig. 5B if the current time is discriminated as earlier than the roll-call time, and goes to step **S32** if the current time agrees with the roll-call time.

For the case some difference occurs between the current time counted on the game server machine **2** and the current time counted on the client terminal device **3,** the game server machine **2** is designed to operate while taking such difference into account, that is, to operate according to the time counted on itself.

When the current time is discriminated as coming into agreement with the roll-call time and process goes to **S32,** the client terminal device **3** then displays on the monitor device a message (or image) typically appears as "Do you stay in the queue? If so, respond us.", which prompts the game server machine **2** to send a response, which is followed by the process in step **S33**.

In step **S33**, whether any responding operation was effected through a predetermined key operation or mouse operation or not is discriminated, and the process goes to step **S37** if the responding operation was discriminated to be completed, and goes to step **S34** if not.

An allowable period for discriminating the presence or absence of the responding operation is predetermined typically as 5 minutes whose counting starts after such message was displayed. So that, when the process goes to step **S34** after detecting no responding operation, the client terminal device **3** discriminates whether the predetermined period has expired without the responding operation or not, and repeats the individual routines of steps **S32** and **S33** if the predetermined period has not expired.

On the other hand, for the case the predetermined period has expired, the process goes to step **S35,** where a message for announcing that the waiting was not established, which typically appears as "You will be omitted from the queue since the responding operation was not detected." , is displayed on the monitor device, and the client terminal device **3** is disconnected from the game server machine **2,** which is followed by the process in step **S36** to terminate the wait processing.

On the other hand, for the case that the process goes to step **S37** after being discriminated in step **S33** that the responding operation has been completed within a predetermined period, the client terminal device **3** generates responding information expressing the completion of the responding operation and sends it to the game server machine **2,** which is followed by the processing in step **S38**.

The game server machine **2** is also designed to execute the roll-call operation under the same timing with the client terminal device **3,** in which whether the current time is, for example, 5 minutes earlier than the roll-call time or not is discriminated in step **S21,** and the routine of the roll-call processing is terminated if the current time was not discriminated as 5 minutes earlier than the roll-call time, whereas the process goes to step **S22** if it was discriminated as 5 minutes earlier.

As has been described in the above, the player is requested to send responding information to the game server machine **2** in step **S37** after the roll-call respond request is displayed in step **S32.** The game server machine **2** thus executes in step **S22** the roll-call confirmation processing for discriminating whether the responding information is sent from the player or not, which is followed by the process in step **S23.**

Such network game system of this embodiment typically adopts a rule such that the right for the waiting of the player will be deleted if the responding information is not sent (in step **S37)** within 5 minutes after the roll-call responding request is issued (in step **S32**) and another 5 minutes elapsed (that is, if total 10 minutes elapsed where the counting starts at the time the roll-call request was issued).

Thus the game server machine **2** discriminates in step **S23** whether 5 minutes has elapsed after the roll-call time expired or not, and the process goes to step **S24** if 5 minutes has not elapsed after the roll-call time expired, and goes to step **S25** if 5 minutes has elapsed.

In step **S25,** the game server machine **2** assumes the player as not keeping the will for staying in the queue since 5 minutes has elapsed after the roll-call time expired, and deletes the right for waiting (order right). The process then goes to step **S26,** where the routine for the roll-call processing shown in the flow chart of Fig. 5A, and the thread for the wait processing shown in the flow chart of Fig. 2 are terminated.

On the other hand, for the case that 5 minutes has not elapsed after the roll-call time and the process goes to step **S24,** the game server machine **2** sends to the client terminal device **3** the roll-call confirmation information expressing that the sending of the responding information was confirmed provided that the sending of the responding information from the player is confirmed, to thereby terminate the process flow shown in Fig. 5A.

Upon reception of the roll-call confirmation information from the game server machine **2,** the client terminal device **3** displays on the monitor device a message for confirming the response, which typically appears as "Sending of the responding information confirmed. Your waiting sustained. Wait a moment for the distribution of the game contents", and then terminates the process flow for the roll-call processing shown in Fig. 5B.

If the waiting is properly maintained by virtue of such roll-call processing, and the game contents are brought into a distributable state for the accessing player, the game server machine **2** and the client terminal device **3** go to steps **S7** and **S16** in Fig. 2, respectively, and exchange target information such as confirming a will for distributing the game contents or actually sending the game contents, to thereby terminate the all routines of the process flow shown in Fig. 2.

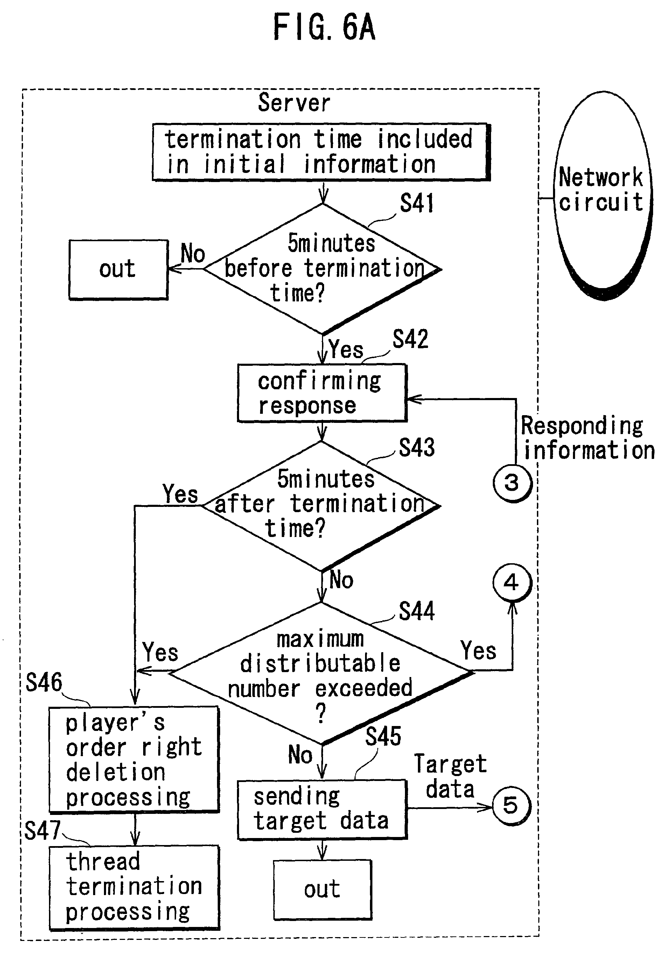

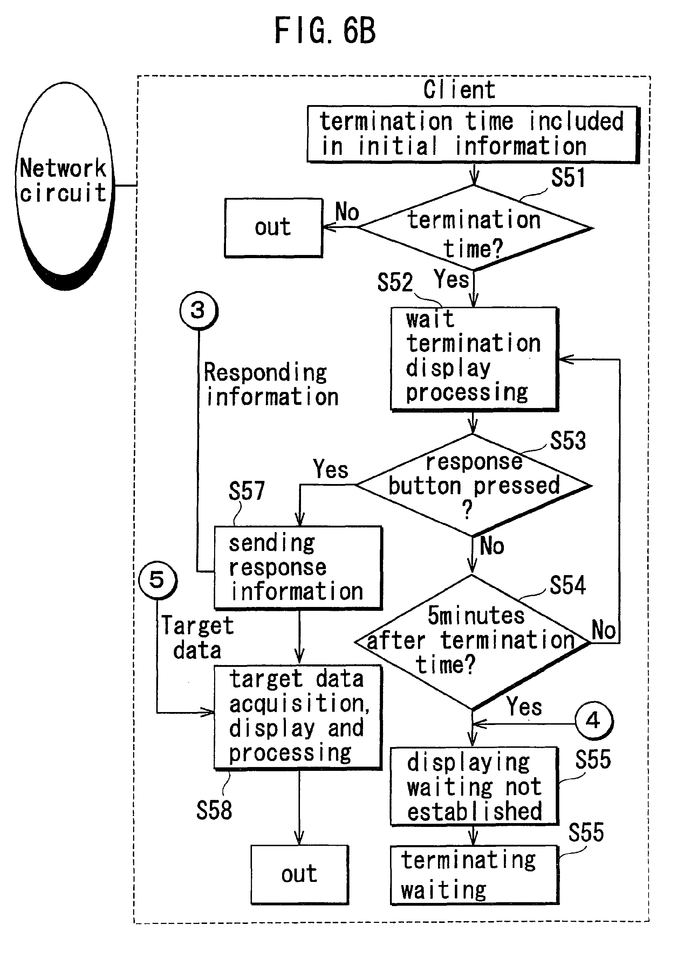

Figs.6A and 6B are flow charts specifically showing wait termination processes executed by the game server machine **2** in step **S7** and by the client terminal device **3** in step **S16.** Among the individual steps in the flow chart of Fig. 6, steps **S41** to **S47** in Fig.6A represent a flow for the wait termination operation on the side of the game server machine **2,** and steps **S51** to **S58** in Fig.6B on the side of the client terminal device **3.**

The game server machine **2** calculates, upon receiving the waiting participation request from a player, a time when the game contents is actually sent to such player who issued such request, based on a total number of players already in the queue before the request from such player is received, a data volume of the game contents and a transmission speed of the game contents, and sends the calculated time as the "wait termination time information", one of the initial information, to the client terminal device **3.**

The client terminal device **3** then discriminates in step **S51** whether the current time agrees with the wait termination time indicated by the wait termination time information, that is, whether the current time agrees with the time for the distribution of the game contents from the game server machine **2**. The process flow shown in Fig. 6B is terminated if the current time is discriminated as being earlier than the time for distributing of the game contents, and goes to step **S52** if the current time is discriminated as coming into agreement with the time for distributing the game contents.

In step **S52**, the client terminal device **3** executes a wait termination display processing for displaying on the monitor device a massage (or image) typically appears as "Thank you for waiting. It's your turn. Respond us if you agree with the distribution of the game contents.", which prompts the game server machine **2** to send a response, which is followed by the process in step **S53**.

In step **S53**, the client terminal device **3** discriminates whether the responding operation in response to the message is executed through a predetermined key operation or mouse operation or not, and goes to step **S57** if the responding operation was discriminated as being completed, and goes to step **S54** if not.

An allowable period for discriminating the presence or absence of the responding operation is predetermined typically as 5 minutes whose counting starts after such message was displayed. So that, when the process goes to step **S54** after detecting no responding operation, the client terminal device **3** discriminates whether the predetermined period has expired without the responding operation or not, and repeats the individual routines of steps **S52** and **S53** if the predetermined period has not expired.

On the other hand, for the case such 5 minutes has expired, the process goes to step **S55,** where a message for announcing that the waiting was not established, which typically appears as "You will be omitted from the queue since the responding operation was not detected.", is displayed on the monitor device, and the client terminal device **3** is disconnected from the game server machine **2,** which is followed by the processing in step **S56** to terminate the wait processing.

On the other hand, for the case that the process goes to step **S57** after being discriminated in step **S53** that the responding operation has been completed within a predetermined period, the client terminal device **3** generates responding information expressing the completion of the responding operation and sends it to the game server machine **2,** which is followed by the processing in step **S58.**

The game server machine **2** is also designed to execute the wait termination operation under the same timing with the client terminal device **3,** in which whether the current time is, for example, 5 minutes earlier than the wait termination time or not is discriminated in step **S41,** and the routine of the wait termination processing is terminated if the current time was not discriminated as 5 minutes earlier than the wait termination time, whereas the process goes to step **S42** if it was discriminated as 5 minutes earlier.

As has been described in the above, the player is requested to send responding information to the game server machine **2** in step **S57** after the wait termination display appeared in step **S52**. The game server machine **2** thus executes in step **S42** the response confirmation processing for discriminating whether the responding information is sent from the player or not, which is followed by the process in step **S43.**

Such network game system of this embodiment typically adopts a rule such that the right for the waiting of the player will be deleted if the responding information is not sent (in step **S57**) within 5 minutes after the wait termination display appeared (in step **S52**) and another 5 minutes elapsed (that is, if total 10 minutes elapsed where the counting starts at the time the wait termination display appeared).

Thus the game server machine **2** discriminates in step **S43** whether 5 minutes has elapsed after the wait termination display appeared or not, and the process goes to step **S44** if 5 minutes has not elapsed after the wait termination display appeared, and goes to step **S46** if 5 minutes has elapsed.

In step **S46,** the game server machine **2** assumes the player as not keeping the will for staying in the queue since 5 minutes has elapsed after the wait termination display appeared, and deletes the right for waiting (order right). The process then goes to step **S47,** where the routine for the wait termination processing shown in the flow chart of Fig. 6A, and the thread for the wait processing shown in the flow chart of Fig. 2 are terminated.

If it was discriminated that 5 minute did not elapse after the wait termination display appeared, the process goes to step **S44** or **S45**.

The step **S44** refers to a step executed for the case a maximum distributable number of the game contents are defined, and the game server machine **2** discriminates whether the order in the queue of the player exceeds the maximum distributable number of the game contents or not when the player's turn comes.

When the order in the queue of the player exceeds the maximum distributable number, the game server machine **2** announces such situation to the client terminal device **3,** deletes the right for waiting (order right) in steps **S46** and **S47**, and terminates the thread for the wait processing in the flow charts of Figs. 6A and 2.

The client terminal device **3,** announced by the game server machine **2** that the order in the queue of the player exceeded the maximum distributable number, displays on the monitor device a message for announcing that the waiting resulted in invalid and terminates such wait processing, where the message typically appears as "Maximum distributable number of the game contents exceeded. Sorry for closing the distribution". This allows the player to recognize that the maximum distributable number of the game contents was exceeded.

On the other hand, step **S45** is a step executed for the case a maximum distributable number of the game contents is unlimited, and the game server machine **2** sends target data (the game contents herein) to the client terminal device **3** when the player's turn comes, to thereby terminate the wait termination processing shown in the flow chart of Fig. 6A.

The client terminal device **3** which received the game contents displays on the monitor device thereof a message expressing the acquisition of the target data in step **S58,** where the message typically appears as "Downloading of the game contents completed", to thereby terminate the wait termination processing shown in the flow chart of Fig. 6B. This allows the player to enjoy the network game according to a program in the downloaded game contents.

As is clear from the above description, the network game system of this embodiment can display on the monitor device of the player's client terminal device **3,** upon receiving a waiting participation request from such player, at least a total number of other users currently in the queue and order of the accessing player corresponding to such total number, which makes it possible to announce current distribution status of the game contents and the order of the distribution to the individual players who have issued the waiting participation requests, and makes them easy since they can feel that "my access was accepted, and the game contents will be distributed on a predetermined time if only I stay in the queue".

For the case the order in the queue of the player is displayed in a graphical style using, for example, game characters, such game characters can be displayed in different colors or pointed with an arrow so as to be readily discriminated from the other, which enhances easy recognition of the player's own position in the queue.

Even for the case that the distributable number of the game contents is limited, the waiting participation request is once accepted, and the right of waiting is deleted only when the access exceeds a predetermined distribution number while displaying such status on the monitor device of the client terminal device **3**, so that the reason why the game contents cannot be distributed is clarified. This successfully prevents the players from feeling uneasy about the game contents not distributed.

Such display of the current total number of the players and order in the queue of the accessing player is beneficial in that clarifying the justice of the preceding players in the queue. The accessing player can also measure a popularity of the game contents distributed from such game server machine **2** based on the current total number of the players in the queue.

The will of staying in the queue of the players is periodically checked by the roll-call processing, and the player who does not execute a predetermined responding operation will be omitted from the queue, so that a problem such that keeping positions for will-less players will be avoidable.

The residual space in the display on the monitor device of the client terminal device **3** can show an advertisement, which allows a proper advertisement of a newly released game or the like.

Since the display has a chat space for the players in the queue, so that each player can enjoy chat with a plurality of other players during the wait time for the game contents, which is beneficial in that establishing inter-players communication and being a good kill-time during the waiting.

The game server machine **2** sends, upon receiving the waiting participation request, current time information for expressing a current time counted on such game server machine **2** as one of the initial information to the client terminal device **3**. The client terminal device **3** executes the individual processes in synchronization with the time counted on the game server machine **2** while taking difference between such received current time and the current time counted in such client terminal device **3** into account.

That is, once the current time information is sent from the game server machine **2** to the client terminal device **3**, the client terminal device **3** can operate in synchronization with the game server machine **2** based on the time counted on itself, so that it is no more necessary to send from the game server machine **2** to the client terminal device **3** information or so for instructing execution of the individual processes each time such processes are about to be executed, and transmitting control program or operation program can be simplified.

While the above description on the foregoing embodiment dealt with a network game system distributing game contents, the present invention will also exhibit similar effects when applied to a content distribution system in which various digital contents such as video game, movie, news and music are distributed through a communication circuit network such as internet, and a network marketing system enabling reservation or sales of concert tickets or other various commodities through such communication circuit network.

In so far as the embodiments of the invention described above are implemented, at least in part, using software-controlled data processing apparatus, it will be appreciated that a computer program providing such software control and a storage medium by which such a computer program is stored are envisaged as aspects of the present invention.

Although particular embodiments have been described herein, it will be appreciated that the invention is not limited thereto and that many modifications and additions thereto may be made within the scope of the invention. For example, various combinations of the features of the following dependent claims can be made with the features of the independent claims without departing from the scope of the present invention.

## Claims

1. A method for displaying wait order comprising the steps of:
sending information from a server machine to a client terminal device whenever accessed by a user via such client terminal device, the information expressing at least a total number of other users accessed earlier than the user and an order in the queue of the user in relation to such total number of other users at the point of time when the access occurred; and
displaying on the client terminal device the received total number of other users and the order in the queue of the user in relation to such total number in a graphical or text style.

2. The method for displaying wait order according to Claim 1, further comprising the steps of:
incrementing the order in the queue of the user each time a predetermined processing is completed for one of other users, and sending to the client terminal device information expressing a new total number of other users and an incremented order in the queue of the user in relation to such new total number of other users whenever the increment occurred; and
displaying on the client terminal device the received new total number and the incremented order in the queue of the user in relation to such new total number in a graphical or text style to thereby update the display.

3. The method for displaying wait order according to Claim 1, further comprising the step of:
displaying on the client terminal device the order in the queue of the user in relation to the total number of other users in a specific display mode.

4. The method for displaying wait order according to Claim 1, further comprising the steps of:
sending current time information expressing current time counted on the server machine to the client terminal device;
correcting on the client terminal device time difference so as to agree a current time counted on the client terminal device with the current time counted on the server machine based on the current time information received from such server machine;
executing a predetermined process on the server machine based on the current time counted thereon; and
executing another predetermined process on the client terminal device in synchronization with the server machine based on the current time counted while being corrected for the time difference.

5. The method for displaying wait order according to Claim 1, further comprising the steps of:
sending from the server machine to the client terminal device roll-call time information used for roll-call processing responsible for confirming a will of staying in the queue;
executing on the server machine the roll-call processing for confirming a will of staying in the queue of the user based on the roll-call time information sent to the client terminal device; and
executing on the client terminal device a responding processing for expressing the will of staying in the queue to the server machine based on the roll-call time information received from the server machine.

6. The method for displaying wait order according to Claim 1, further comprising the steps of:
sending from the server machine to the client terminal device termination time information for expressing a termination time of the waiting;
executing on the client terminal device a responding processing to the server machine in order to issue a send request for target information within a predetermined time period from a termination time specified by the termination time information received from the server machine; and
executing on the server machine a wait termination processing for sending the target information to the client terminal device when the send request was issued by the client terminal device within a predetermined time period from a termination time specified by the termination time information sent to the client terminal device.

7. The method for displaying wait order according to Claim 1, further comprising the step of:
deleting a right for the waiting when the responding processing was not executed.

8. The method for displaying wait order according to Claim 1, further comprising the step of:
displaying on the client terminal device an arbitrary advertisement or a chat space allowing a plurality of users to chat based on text communication.

9. A computer program to be executed on a computer for displaying wait order, comprising the steps of:
sending information from a server machine to a client terminal device whenever accessed by a user via such client terminal device, the information expressing at least a total number of other users accessed earlier than the user and an order in the queue of the user in relation to such total number of other users at the point of time when the access occurred; and
displaying on the client terminal device the received total number of other users and the order in the queue of the user in relation to such total number in a graphical or text style.

10. The computer program to be executed on a computer for displaying wait order according to Claim 9, further comprising the steps of:
incrementing the order in the queue of the user each time a predetermined processing is completed for one of other users, and sending to the client terminal device information expressing a new total number of other users and an incremented order in the queue of the user in relation to such new total number of other users whenever the increment occurred; and
displaying on the client terminal device the received new total number and the incremented order in the queue of the user in relation to such new total number in a graphical or text style to thereby update the display.

11. The computer program to be executed on a computer for displaying wait order according to Claim 9, further comprising the step of:
displaying on the client terminal device the order in the queue of the user in relation to the total number of other users in a specific display mode.

12. The computer program to be executed on a computer for displaying wait order according to Claim 9, further comprising the steps of:
sending current time information expressing current time counted on the server machine to the client terminal device;
correcting on the client terminal device time difference so as to agree a current time counted on the client terminal device with the current time counted on the server machine based on the current time information received from such server machine;
executing a predetermined process on the server machine based on the current time counted thereon; and
executing another predetermined process on the client terminal device in synchronization with the server machine based on the current time counted while being corrected for the time difference.

13. The computer program to be executed on a computer for displaying wait order according to Claim 9, further comprising the steps of:
sending from the server machine to the client terminal device roll-call time information used for roll-call processing responsible for confirming a will of staying in the queue;
executing on the server machine the roll-call processing for confirming a will of staying in the queue of the user based on the roll-call time information sent to the client terminal device; and
executing on the client terminal device a responding processing for expressing the will of staying in the queue to the server machine based on the roll-call time information received from the server machine.

14. The computer program to be executed on a computer for displaying wait order according to Claim 9, further comprising the steps of:
sending from the server machine to the client terminal device termination time information for expressing a termination time of the waiting;
executing on the client terminal device a responding processing to the server machine in order to issue a send request for target information within a predetermined time period from a termination time specified by the termination time information received from the server machine; and
executing on the server machine a wait termination processing for sending the target information to the client terminal device when the send request was issued by the client terminal device within a predetermined time period from a termination time specified by the termination time information sent to the client terminal device.

15. The computer program to be executed on a computer for displaying wait order according to Claim 9, further comprising the step of:
deleting a right for the waiting when the responding processing was not executed.

16. The computer program to be executed on a computer for displaying wait order according to Claim 9, further comprising the step of:
displaying on the client terminal device an arbitrary advertisement or a chat space allowing a plurality of users to chat based on text communication.

17. A storage medium storing a computer program for displaying wait order, wherein the computer program allows a computer to execute the steps of:
sending information from a server machine to a client terminal device whenever accessed by a user via such client terminal device, the information expressing at least a total number of other users accessed earlier than the user and an order in the queue of the user in relation to such total number of other users at the point of time when the access occurred; and
displaying on the client terminal device the received total number of other users and the order in the queue of the user in relation to such total number in a graphical or text style.

18. The storage medium storing a computer program for displaying wait order according to Claim 17, wherein the computer program allows a computer to execute the steps of:
incrementing the order in the queue of the user each time a predetermined processing is completed for one of other users, and sending to the client terminal device information expressing a new total number of other users and an incremented order in the queue of the user in relation to such new total number of other users whenever the increment occurred; and
displaying on the client terminal device the received new total number and the incremented order in the queue of the user in relation to such new total number in a graphical or text style to thereby update the display.

19. The storage medium storing a computer program for displaying wait order according to Claim 17, wherein the computer program allows a computer to execute the step of:
displaying on the client terminal device the order in the queue of the user in relation to the total number of other users in a specific display mode.

20. The storage medium storing a computer program for displaying wait order according to Claim 17, wherein the computer program allows a computer to execute the steps of:
sending current time information expressing current time counted on the server machine to the client terminal device;
correcting on the client terminal device time difference so as to agree a current time counted on the client terminal device with the current time counted on the server machine based on the current time information received from such server machine;
executing a predetermined process on the server machine based on the current time counted thereon; and
executing another predetermined process on the client terminal device in synchronization with the server machine based on the current time counted while being corrected for the time difference.

21. The storage medium storing a computer program for displaying wait order according to Claim 17, wherein the computer program allows a computer to execute the steps of:
sending from the server machine to the client terminal device roll-call time information used for roll-call processing responsible for confirming a will of staying in the queue;
executing on the server machine the roll-call processing for confirming a will of staying in the queue of the user based on the roll-call time information sent to the client terminal device; and
executing on the client terminal device a responding processing for expressing the will of staying in the queue to the server machine based on the roll-call time information received from the server machine.

22. The storage medium storing a computer program for displaying wait order according to Claim 17, wherein the computer program allows a computer to execute the steps of:
sending from the server machine to the client terminal device termination time information for expressing a termination time of the waiting;
executing on the client terminal device a responding processing to the server machine in order to issue a send request for target information within a predetermined time period from a termination time specified by the termination time information received from the server machine; and
executing on the server machine a wait termination processing for sending the target information to the client terminal device when the send request was issued by the client terminal device within a predetermined time period from a termination time specified by the termination time information sent to the client terminal device.

23. The storage medium storing a computer program for displaying wait order according to Claim 17, wherein the computer program allows a computer to execute the step of:
deleting a right for the waiting when the responding processing was not executed.

24. The storage medium storing a computer program for displaying wait order according to Claim 17, wherein the computer program allows a computer to execute the step of:
displaying on the client terminal device an arbitrary advertisement or a chat space allowing a plurality of users to chat based on text communication.

25. A content distribution system comprising:
a server machine in wire connection or wireless connection with a predetermined communication circuit network, which is capable of sending through such communication circuit network information whenever accessed by a user, the information expressing at least a total number of other users accessed earlier than the user and an order in the queue of the user in relation to such total number of other users at the point of time when the access occurred; and
a client terminal device in wire connection or wireless connection with the predetermined communication circuit network, which is capable of making an access to the server machine in order to request content distribution, and of displaying the total number of other users and the order in the queue of the user in relation to such total number in a graphical or text style based on the information received in response to the access from the server machine through the communication circuit network.

26. The content distribution system according to Claim 25, wherein the server machine increments the order in the queue of the user each time a predetermined processing is completed for one of other users, and sends to the client terminal device information expressing a new total number of other users and an incremented order in the queue of the user in relation to such new total number of other users whenever the increment occurred; and
the client terminal device displays the new total number and the incremented order in the queue of the user in relation to such new total number in a graphical or text style to thereby update the display based on the information received from the server machine.

27. The content distribution system according to Claim 25, wherein the client terminal device displays the order in the queue of the user in relation to the total number of other users in a specific display mode.

28. The content distribution system according to Claim 25, wherein the server machine sends current time information expressing current time counted thereon to the client terminal device and executes a predetermined process based on the current time counted thereon; and
the client terminal device corrects time difference so as to agree a current time counted thereon with the current time counted on the server machine based on the current time information received from such server machine, and executes another predetermined process in synchronization with the server machine based on the current time counted while being corrected for the time difference.

29. The content distribution system according to Claim 25, wherein the server machine sends to the client terminal device roll-call time information used for roll-call processing responsible for confirming a will of staying in the queue and executes the roll-call processing for confirming a will of staying in the queue of the user based on the roll-call time information sent to the client terminal device; and
the client terminal device executes a responding processing for expressing the will of staying in the queue to the server machine based on the roll-call time information received from the server machine.

30. The content distribution system according to Claim 25, wherein the client terminal device executes a responding processing to the server machine in order to issue a send request for target information within a predetermined time period from a termination time specified by the termination time information received from the server machine; and
the server machine sends to the client terminal device termination time information for expressing a termination time of the waiting and executes a wait termination processing for sending the target information to the client terminal device when the send request was issued by the client terminal device within a predetermined time period from a termination time specified by the termination time information sent to the client terminal device.

31. The content distribution system according to Claim 25, wherein at least either of the server machine or the client terminal device deletes a right for the waiting when the responding processing was not executed.

32. The content distribution system according to Claim 25, wherein the client terminal device displays at least either of an arbitrary advertisement or a chat space allowing a plurality of users to chat based on text communication.
